Europäisches Patentamt

European Patent Office

Office européen des brevets

(19)

(11) Veröffentlichungsnummer : **0 455 960 B1**

# (12) EUROPÄISCHE PATENTSCHRIFT

(45) Veröffentlichungstag der Patentschrift :
**09.11.94 Patentblatt 94/45**

(51) Int. Cl.$^5$ : **H01F 7/22,** H02M 3/142

(21) Anmeldenummer : **91104111.9**

(22) Anmeldetag : **16.03.91**

(54) **Zweiquadrantenstromrichter und dessen Verwendung als Steuerelement eines Energiespeichers.**

(30) Priorität : **08.05.90 CH 1790/90**

(43) Veröffentlichungstag der Anmeldung :
**13.11.91 Patentblatt 91/46**

(45) Bekanntmachung des Hinweises auf die
Patenterteilung :
**09.11.94 Patentblatt 94/45**

(84) Benannte Vertragsstaaten :
**CH DE ES FR GB IT LI**

(56) Entgegenhaltungen :
**EP-A- 0 088 445
DE-A- 1 964 755
IEEE TRANSACTIONS ON POWER SYSTEMS.
vol. 3, no. 4, November 1988, NEW YORK US**

(56) Entgegenhaltungen :
**Murakami: "Application of Superconductive
Magnet Energy Storage to improvePower System Dynamic Performance"
INSTRUMENTS AND EXPERIMENTAL TECH-
NIQUES. vol. 24, no. 5i, Oktober 1971, NEWY-
ORK US Seiten 1297 - 1299; Furman:
"Stabilization of the Energy of anAccelerator
Tank Circuit"**

(73) Patentinhaber : **ASEA BROWN BOVERI AG
Haselstrasse 16
CH-5401 Baden (CH)**

(72) Erfinder : **Dähler, Peter
Unterer Leeweg 340
CH-5236 Remigen (CH)**
Erfinder : **Häusler, Michael, Dr.
Sportplatzweg 4
W-7891 Weilheim (DE)**

## Beschreibung

Zweiquadrantenstromrichter und dessen Verwendung als Steuerelement eines Energiespeichers

TECHNISCHES GEBIET

Bei der Erfindung wird ausgegangen von einem Zweiquadrantenstromrichter nach dem Oberbegriff der Patentansprüche 1 und 2.

STAND DER TECHNIK

Mit dem Oberbegriff nimmt die Erfindung auf einen Stand der Technik Bezug, wie er aus der EP-A1-0 088 445 bekannt ist. Dort sind zur Übertragung von Energie von und zu einer Drossel sowie zur Übertragung von Energie über einen Kondensator zu einer anderen Drossel 2 Brückenschaltungen mit je 2 Dioden und 2 GTO-Thyristoren in den Brückenzweigen vorgesehen. Der Freilaufstrom durch eine Drossel kann alternierend durch 2 verschiedene Brückenzweige gesteuert werden, so dass eine reduzierte Schalthäufigkeit der Halbleiterventile resultiert.

Aus der DE-A-1 964 755 ist es bekannt, zum Einspeisen, Speichern und Unterhalten eines elektrischen Stroms in einem Supraleiterstromkreis parallel zu einer supraleitenden Spule eine Diode oder einen Schalter vorzusehen.

Aus: Instruments and Experimental Techniques, Band 24, Nr. 5$^l$, September/Oktober 1971, New York/US, E. G. Furman: "Stabilisation of the energy of an accelerator tank circuit", S. 1297 - 1299, ist es bekannt, einen Zweiquadrantenstromrichter zur Erregung des Magneten eines Betatrons zu verwenden, wobei Energie pulsierend aus einem nichtstabilisierten Netz über eine sättigbare Drossel zugeführt wird. Eine Rückspeisung der im Magneten gespeicherten Energie ins Netz wird durch einen netzseitigen Spannungsstabilisierungskreis verhindert, der in Reihe mit einer Drossel einen Thyristor aufweist. Massnahmen zu Reduzierung der Schalthäufigkeit der Halbleiterventile des Zweiquadrantenstromrichters sind nicht angegeben.

Zum einschlägigen Stand der Technik wird zusätzlich auf: IEEE Transactions-on Power Systems, Vol. 3, No. 4, November 1988, S. 1418 - 1425, hingewiesen. Dort sind zur Stabilisierung eines Stromnetzes hinsichtlich dessen Wirk- und Blindleistung zwei 6pulsige Stromrichter in Graetz-Brückenschaltung über einen supraleitenden Magneten in Reihe geschaltet. Dabei müssen die Halbleiterventile der Stromrichter leistungsmässig überdimensioniert werden.

DARSTELLUNG DER ERFINDUNG

Die Erfindung, wie sie in den Patentansprüchen 1 und 2 definiert ist, löst die Aufgabe, Schaltungen von. Zweiquadrantenstromrichtern anzugeben, die eine leistungsmässig geringere Belastung der verwendeten Halbleiterventile ermöglichen.

Ein Vorteil der Erfindung besteht darin, dass ein Teil der Halbleiterventile für eine geringere elektrische Leistung ausgelegt sein kann.

Gemäss einer Ausführung der Erfindung kann die Anzahl der Halbleiterventile des Zweiquadrantenstromrichters auf 2 reduziert werden.

Ein steuerbares Ventil in Parallelschaltung zum Magnetspeicher ermöglicht eine weitere Entlastung der Halbleiterventile des Zweiquadrantenstromrichters in Betriebszuständen, in denen der Magnetspeicher weder geladen noch entladen werden muss.

KURZE BESCHREIBUNG DER ZEICHNUNGEN

Die Erfindung wird nachstehend anhand von Ausführungsbeispielen erläutert. Es zeigen:

Fig. 1      eine vollstatische Kurzkupplung 2er Stromnetze mit einem Umrichter, an dessen Gleichspannungszwischenkreis ein Zweiquadrantenstromrichter als Stellglied eines supraleitenden Magnetspeichers angeschlossen ist,

Fig. 2      ein Schaltbild eines Zweiquadrantenstromrichters gemäss Fig. 1 mit 3 mechanischen Schaltern zusätzlich zu 4 Halbleiterventilen, im Anschluss an einen Zwischenkreiskondensator und den Magnetspeicher,

Fig. 3a - 3c      Betriebszustände eines Zweiquadrantenstromrichters gemäss Fig. 2, jedoch ohne mechanische Schalter,

Fig. 4a) - 4i)      Signaldiagramme der Ein- und Ausschaltzeiten der Halbleiterventile in den Betriebs-

|  |  |
|---|---|
| | zuständen gemäss den Fig. 3a - 3c, |
| Fig. 5a - 5d | Signaldiagramme zur Veranschaulichung der Spannungs- und Strommittelwerte beim Laden und Entladen des Magnetspeichers in den Betriebszuständen gemäss den Fig. 3a - 3c, |
| Fig. 6a - 6d | Betriebszustände eines Zweiquadrantenstromrichters mit nur einem zusätzlichen mechanischen Schalter für den Lade- bzw. Entladevorgang, |
| Fig. 7a) - 7j) | Signaldiagramme der Ein- und Auschaltzeiten der Halbleiterventile in den Betriebszuständen gemäss den Fig. 6a - 6d, |
| Fig. 8a - 8g | Betriebszustände eines Zweiquadrantenstromrichters mit nur 2 Halbleiterventilen, |
| Fig. 9a und 9b | Signaldiagramme der Ventilbelastungen beim Laden bzw. Entladen des Magnetspeichers in den Betriebszuständen gemäss den Fig. 3a - 3c, entsprechend einer 1. Ausführungsvariante, und |
| Fig. 10a und 10b | Signaldiagramme der Ventilbelastungen beim Laden bzw. Entladen des Magnetspeichers in den Betriebszuständen gemäss den Fig. 6a - 6d sowie den Fig. 8a - 8g, entsprechend einer 2. und 3. Ausführungsvariante. |

## WEGE ZUR AUSFÜHRUNG DER ERFINDUNG

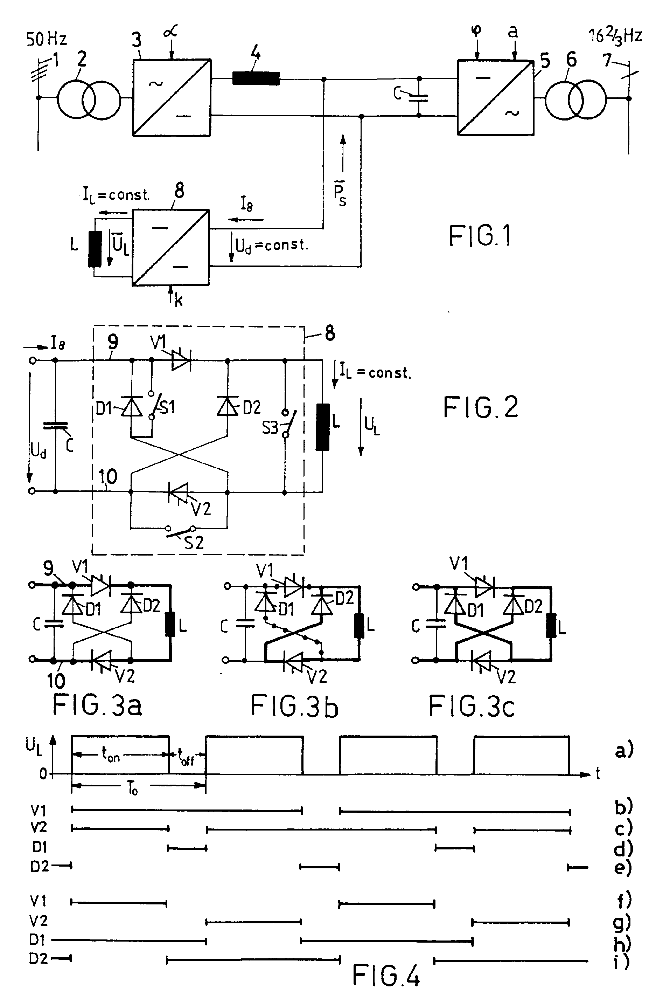

Fig. 1 zeigt als Beispiel einer Netzkupplung die Verbindung eines 3phasigen 50-Hz-Landesnetzes (1) mit einem einphasigen 16 2/3-Hz-Bahnnetz (7) als vollstatische "Kurzkupplung". Die beiden Stromnetze (1) und (7) sind über einen Landesnetztransformator (2), einen netzkommutierten Stromrichter bzw. I-Umrichter (3), einen Gleichspannungszwischenkreis, der eine Zwischenkreisdrossel (4) und einen Zwischenkreiskondensator (C) aufweist, einen zwangskommutierten Stromrichter bzw. U-Umrichter (5) und einen Bahnnetztransformator (6) miteinander verbunden.

Der netzkommutierte Stromrichter (3) ist als konventioneller, antiparalleler Thyristorstromrichter ausgeführt. Seine Stellgrösse, der Zündwinkel ($\alpha$), wird im Normalbetrieb zur Konstanthaltung der Zwischenkreisspannung ($U_d$) und damit indirekt zum Ausgleich der Wirkleistungsbilanz im Zwischenkreis herangezogen. Der zwangskommutierte Stromrichter (5) ist mit GTO-Thyristoren ausgeführt. Mit Hilfe seiner 2 Stellgrössen, einem Phasenwinkel ($\psi$) und einer Amplitudenstellgrösse (a), kann den Wirk- und Blindleistungsbedürfnissen des Bahnnetzes (7) unabhängig voneinander Rechnung getragen werden. Eine supraleitende Drossel bzw. ein Magnetspeicher (L), an dem eine Spannung ($U_L$) abfällt und durch den ein Magnetspeicherstrom ($I_L$) fliesst, ist über ein Stellglied bzw. einen Zweiquadrantenstromrichter (8) an den Gleichspannungszwischenkreis angeschlossen. Die Spule (L) für eine Energiespeicherung von z. B. 1 MWh kann als Solenoid eine Höhe von 3 m bei einem Durchmesser von ca. 8,9 m aufweisen. ($I_8$) bezeichnet einen Lade- bzw. Entladestrom durch den Zweiquadrantenstromrichter (8).

Dank der sehr schnellen Regelbarkeit bringt eine solche Ergänzung der Netzkupplung folgende Vorteile mit sich:
- Entlastung des Partnernetzes vor Leistungsfluktuationen (hier des Bahnnetzes (7) im Minuten- bis Stundenbereich),
- Überbrückung der Leistungsübertragung bei kurzzeitigem Ausfall eines der beiden Stromnetze (1) und (7),
- Abfederung des Laststosses für das ungestörte Stromnetz beim Ausfall eines Stromnetzes oder eines Stromrichters (3, 5).

Als elektronisch erzeugte, schnell variierbare Stellgrösse wird dem Zweiquadrantenstromrichter (8) ein Schaltverhältnis (k) zugeführt. Der Zweiquadrantenstromrichter (8) kann als Gleichspannungstransformator mit elektronisch verstellbarem Übersetzungsverhältnis (k) aufgefasst werden.

Beim Laden des Magnetspeichers (L) gilt : $k = t_{on}/T_0$, beim Entladen des Magnetspeichers (L) gilt: $k = t_{off}/T_0$, mit

$t_{on}$ : zyklische Ladedauer, Entladefreilaufdauer,
$t_{off}$: zyklische Entladedauer, Ladefreilaufdauer und
$T_0$ : Schaltzyklusdauer ($T_0 = t_{on} + t_{off}$), vgl. z. B. Fig. 4a).

Die Taktfrequenz $f = 1/T_0$ des Zweiquadrantenstromrichters (8) ergibt sich aus einer wirtschaftlichen Optimierung, wobei die Schaltverluste des Zweiquadrantenstromrichters (8) einerseits und der noch akzeptable resultierende Gleichspannungsrippel (Oberschwingungen) andererseits zu berücksichtigen sind.

Fig. 2 zeigt einen Zweiquadrantenstromrichter (8) mit einem 1. steuerbaren Ventil bzw. Thyristor (V1) in einer 1. Gleichspannungsleitung (9), dessen Kathode über den Magnetspeicher (L) mit der Anode eines 2. steuerbaren Ventils bzw. Thyristors (V2) in einer 2. Gleichspannungsleitung (10) verbunden ist. An den Gleichspannungsleitungen (9) und (10) liegt die Zwischenkreisspannung ($U_d$) des Zwischenkreiskondensators (C) an. Die Anode des Thyristors (V2) ist mit der Anode einer Diode (D1) verbunden, deren Kathode an die Anode des Thyristors (V1) angeschlossen ist. Die Kathode des Thyristors (V2) ist mit der Anode einer Diode (D2) verbunden, deren Kathode an die Kathode des Thyristors (V1) angeschlossen ist. In Parallelzweigen zur Diode (D1), zum Thyristor (V2) und zum Magnetspeicher (L) sind mechanische Schalter (S1) bzw. (S2) bzw. (S3) vorgesehen.

Die Spannungsauslegung der Halbleiterventile (V1, V2, D1, D2) ergibt sich aus der Zwischenkreisspannung ($U_d$), welche sich aus der Optimierung der Stromrichter (3, 5) ergibt.

Die Stromauslegung der abschaltbaren Ventile (V1, V2) ergibt sich aus dem maximalen Strom ($I_{Lmax}$) des supraleitenden Magneten (L) und dem Maximalwert des Schaltverhältnisses (k) beim Laden bzw. dessen Minimalwert beim Entladen.

Die Stromauslegung der Dioden (D1, D2) ergibt sich aus dem maximalen Strom ($I_{Lmax}$) des supraleitenden Magneten (L) und dem minimalen Wert des Schaltverhältnisses (k) beim Laden bzw. von dessen maximalem Wert beim Entladen.

Nachfolgend sollen 3 Ausführungsvarianten beschrieben werden, welche sich in folgenden Merkmalen unterscheiden:

- Anzahl der Halbleiterventile, zusätzliche mechanische Schaltelemente,
- Stromauslegung der Halbleiterventile,
- Verluste im Zweiquadrantenstromrichter (8) und
- dynamische Umschalteigenschaften beim Laden - Entladen.

Variante 1:

Die zugehörige Schaltung, die keinen Gegenstand der Erfindung darstellt, ist den Fig. 3a - 3c zu entnehmen, die derjenigen von Fig. 2 entspricht, wobei jedoch die mechanischen Schalter (S1 - S3) fehlen. Als steuerbare Ventile können zwangskommutierte Thyristoren oder abschaltbare GTO-Thyristoren (V1, V2) verwendet werden, die eine Blockier- aber keine Sperrfähigkeit aufweisen.

Während des Ladeintervalls des Magnetspeichers (L) sind beide Thyristoren (V1, V2) leitend, vgl. Fig. 3a. Während des Entladeintervalls sind beide Thyristoren (V1, V2) gesperrt und die beiden Dioden (D1, D2) leitend, vgl. Fig. 3c. Durch Abschalten eines Thyristors (V1) oder (V2) beim Laden oder durch Zünden eines Thyristors beim Entladen wird abwechselnd zyklisch ein Freilauf für den Magnetstrom ($I_L$) geschaltet, vgl. Fig. 3b. Wichtig ist, dass der Freilauf abwechselnd über D1 - V1 und über V2 - D2 gesteuert wird. Der Übergang vom Laden zum Entladen und umgekehrt ist jederzeit und verzugsfrei möglich.

Die relative Strombelastung der Ventile, bezogen auf eine dauernde Leitung, entsprechend dem Maximalstrom ($I_{Lmax}$), ist aus den Fig. 4a) - 4i) sowie den Fig. 9a und 9b ersichtlich. Die Schaltfrequenz der Ventile und damit deren Schaltverluste sind halb so gross wie die nach aussen wirksame Taktfrequenz.

In Fig. 4a) ist auf der Ordinate der Spannungsabfall ($U_L$) am Magnetspeicher (L) und auf der Abszisse die Zeit (t) aufgetragen. Die Einschaltdauer der Ventile (V1), (V2), (D1) und (D2) beim Laden des Magnetspeichers (L) ist in den Fig. 4b) bis 4e) dargestellt. Man erkennt daraus, dass jedes Ventil nur bei jedem 2. Taktzyklus gemäss Fig. 4a) geschaltet wird. Die Dioden (D1) und (D2) sind während der Ladefreilaufdauern ($t_{off}$) alternierend stromführend.

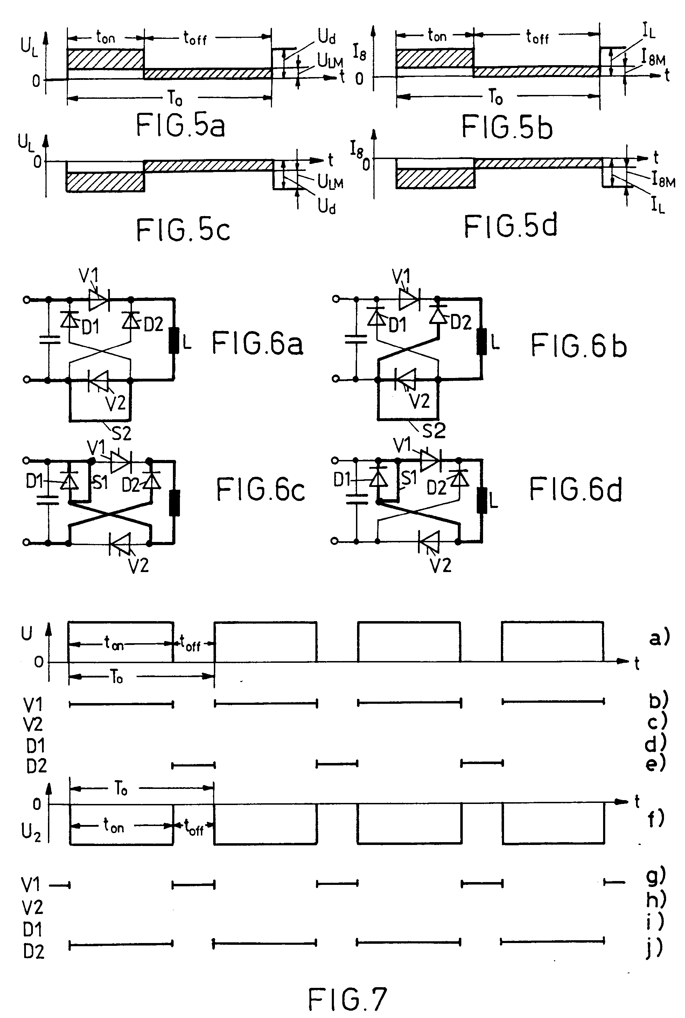

Die Einschaltdauer der 4 Ventile (V1, V2, D1, D2) beim Entladen des Magnetspeichers (L) ist in den Fig. 4f) bis 4i) dargestellt, wobei das Entladen während der Entladedauern ($t_{off}$) gemäss Fig. 4a) erfolgt. Im Unterschied zum Ladevorgang gemäss Fig. 4a) ist dabei während der Entladefreilaufdauer ($t_{on}$) die Spannung ($U_L$) am Magnetspeicher (L) gleich 0 und während ($t_{off}$) gleich $-U_L$, vgl. Fig. 7f). Auch beim Entladen wird jedes Ventil nur bei jedem 2. Schaltzyklus vom nichtleitenden in den leitenden Zustand und umgekehrt versetzt.

Für den Ladebetrieb des Magnetspeichers (L) ist in Fig. 5a die an ihm abfallende Spannung ($U_L$) und in Fig. 5b der Strom ($I_8$) durch den Zweiquadrantenstromrichter (8) in Abhängigkeit von der Zeit (t) aufgetragen. Die schraffierten Flächen kennzeichnen gleiche Spannungs- bzw. Strommittelwerte ($U_{LM}$, $I_{8M}$) während ($t_{on}$) bzw. ($t_{off}$). Entsprechende Signaldiagramme für den Entladebetrieb des Magnetspeichers (8) sind in den Fig. 5c und 5d dargestellt.

Für den Ladebetrieb gilt:

$$U_{LM} = t_{on} \cdot U_d/T_0,$$
$$I_{8M} = t_{on} \cdot I_L/T_0 \text{ und}$$
$$P_{8M} = U_d \cdot I_{8M} = U_d \cdot t_{on} \cdot I_L/T_0,$$

wobei $P_{8M}$ den Mittelwert der übertragenen Leistung bedeutet. Die entsprechenden Werte für den Entladebetrieb erhält man durch Ersetzen von $t_{on}$ durch $-t_{off}$.

Als Option kann zum Magnetspeicher (L) ein mechanischer Bypass-Schalter (S3) gemäss Fig. 2 vorgesehen sein. Dieser Bypass-Schalter (S3) ist dann besonders vorteilhaft, wenn der Zweiquadrantenstromrichter (8) über längere Zeiträume (Stunden) im Bereitschaftsbetrieb verharren soll, wobei der Magnetspeicher (L) geladen ist, aber weder geladen noch entladen werden soll. Bei geschlossenem Bypass-Schalter (S3) muss sichergestellt sein, dass nicht beide steuerbaren Ventile (V1, V2) gezündet bzw. leitend sind.

Die Variante 1 ist wegen der halben Schaltfrequenz der Ventile dynamisch optimal. Es sind 4 Halbleiterventile erforderlich, von denen sich immer 2 im Strompfad befinden.

Variante 2:

Im Unterschied zur Variante 1 sind bei dem Zweiquadrantenstromrichter (8) zusätzlich zu einem abschaltbaren und einem Diodenventil (V2, D1) mechanische Kurzschlussschalter (S1, S2) parallelgeschaltet, vgl. die Fig. 6a - 6d.

Die Fig. 6a und 6b zeigen den Stromfluss beim Laden des Magnetspeichers (L), entsprechend dem in Fig. 7a) dargestellten Ladezyklus. Dabei wird nur der zum Ventil (V2) parallele mechanische Schalter (S2) benötigt, der auf Grund seines kleineren Leitungswiderstandes den überwiegenden Teil des Lade- bzw. Freilaufstromes übernimmt und somit das Ventil (V2) entlastet. Die relative Strombelastung der 4 Halbleiterventile (V1, V2, D1, D2) ist den Fig. 7b) bis 7e) zu entnehmen.

Das Entladen des Magnetspeichers (L) könnte prinzipiell gemäss Variante 1 erfolgen. Der gemäss den Schaltungen der Fig. 6c und 6d vorgesehene mechanische Schalter (S1) parallel zur Diode (D1) entlastet diese beim Entladevorgang, dessen Stromfluss Fig. 6c zu entnehmen ist. Fig. 6d zeigt den dazugehörigen Freilaufstrom während ($t_{on}$), entsprechend dem in Fig. 7f) dargestellten Entladezyklus. Die relative Strombelastung der Halbleiterventile (V1, V2, D1, D2) ist in den Fig. 7g) bis 7j) dargestellt. Prinzipiell könnte dieser Entladezyklus auch mit dem Ladezyklus der Variante 1 kombiniert werden.

Variante 2 hat den Vorteil, dass praktisch jeweils nur 1 Halbleiterventil stromführend ist. Sowohl beim Laden wie auch beim Entladen sind das nacheinander die Ventile (V1) und (D2). Das abschaltbare Ventil (V2) und die Diode (D1) können strommässig wesentlich schwächer dimensioniert werden, da sie nur in Übergangszuständen Strom führen müssen, d. h. ca. 100 ms, je nach Qualität der mechanischen Schalter.

Als Option kann ein mechanischer Bypass-Schalter (S3) parallel zum Magnetspeicher (L) vorgesehen sein, wie bei Variante 1.

Variante 3:

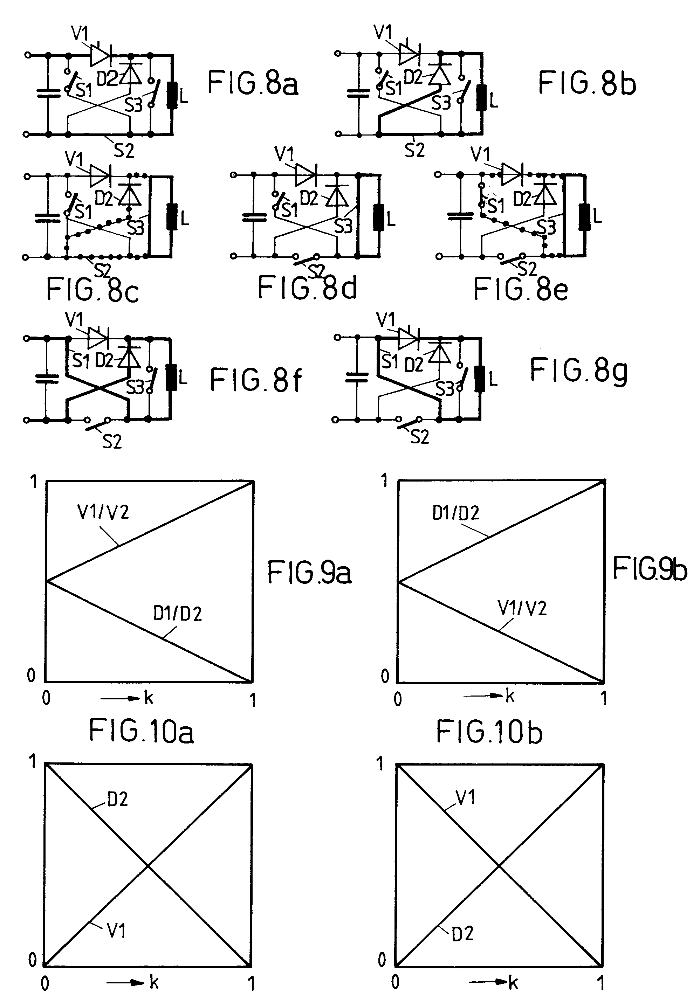

Die zugehörige Schaltung, die keinen Gegenstand der Erfindung darstellt, ist den Fig. 8a bis 8g zu entnehmen. Es werden nur ein abschaltbares Halbleiterventil (V1) und eine Diode (D2) benötigt. Die Verluste im Zweiquadrantenstromrichter (8) sind minimal.

Der Stromfluss beim Laden des Magnetspeichers (L) ist in den Fig. 8a und 8b dargestellt, derjenige beim Entladen in den Fig. 8f und 8g. Das Umschalten vom Ladebetrieb auf Entladebetrieb erfolgt nacheinander gemäss den in den Fig. 8c bis 8e dargestellten Schaltzuständen. Das Umschalten vom Entladebetrieb auf Ladebetrieb erfolgt nacheinander über die Zustände gemäss den Fig. 8e, 8d und 8c.

Die relative Strombelastung der Halbleiterventile (V1, D2) beim Laden ist in Fig. 10a und beim Entladen in Fig. 10b dargestellt. Auf der Ordinate ist die Strombelastung aufgetragen, wobei die Ziffer 1 einer Belastung von 100 % entspricht. Auf der Abszisse ist das Schaltverhältnis (k) aufgetragen. Für Variante 2 gelten die gleichen Belastungsverhältnisse.

Für Variante 1 ist die Strombelastung beim Laden in Fig. 9a und beim Entladen in Fig. 9b dargestellt. Es gelten die gleichen Ordinaten- und Abszissenbezeichnungen wie für Fig. 10a.

Es versteht sich, dass bei Variante 3 die Halbleiterventile (V1) und (D2) durch mechanische Schalter ersetzt sein können, wobei dann anstelle der mechanischen Schalter (S1) und (S2) Halbleiterventile (D1) und (V2) vorzusehen sind.

Entsprechendes gilt für Variante 2. Statt paralleler mechanischer Schalter (S1) und (S2) zu den Ventilen (D1) und (V2) könnten parallele mechanische Schalter zu den Ventilen (V1) und (D2) vorgesehen sein.

Bei der in Fig. 1 dargestellten Netzkupplung kann der Stromrichter (3) 2 antiparallele, 12pulsige Thyristorstromrichter in kreisstromfreier Schaltung aufweisen. Dies ist besonders dann von Vorteil, wenn die Zwischenkreisspannung ($U_d$) konstant und unipolar gehalten werden muss und eine schnelle Leistungsumkehr von der Seite des Bahnnetzes (7) her verlangt wird.

Durch den Zweiquadrantenstromrichter (8) ist es nun möglich, diese Leistungsumkehr am Stromrichter (3) durch eine potentialmässig umgekehrte Aufschaltung der Zwischenkreisspannung ($U_d$) auf dessen Stromrichteranschlüsse zu erreichen. Diese Umpolung kann im stromlosen Zustand des Stromrichters (3) durch gewöhnliche motorisierte Trenner geschehen. Durch diese Massnahme kann der Bauelementeaufwand für den Stromrichter (3) halbiert werden. Die dabei eintretende Leistungspause auf der Seite des Landesnetzes (1) kann durch den Zweiquadrantenstromrichter (8) überbrückt werden, so dass sich für das Bahnnetz (7) keine nachteilige Leistungspause bemerkbar macht.

Zweiquadrantenstromrichter (8) mit Energiespeichermagneten (L) können ferner vorteilhaft in sog. USV-Anlagen zur unterbrechungsfreien Stromversorgung verwendet werden. Kurzzeitige Stromausfälle und Spannungseinbrüche, wie sie z. B. beim gleichzeitigen Anfahren elektrischer Triebfahrzeuge im Stundentakt auftreten, können durch ein Entladen des Magnetspeichers (L) überbrückt bzw. ausgeglichen werden.

Das Verfahren mit alternierendem Freilauf gemäss Variante 1 kann vorteilhaft auch bei der Variante 2 angewandt werden.

## Patentansprüche

1. Zweiquadrantenstromrichter (8), der mit mindestens einem Magnetspeicher (L) in Wirkverbindung steht,
   a) wobei mindestens ein 1. steuerbares Schaltelement (V1) in einer 1. Gleichspannungsleitung (9) über den mindestens einen Magnetspeicher (L) mit mindestens einem 2. steuerbaren Schaltelement (V2, S2) in einer 2. Gleichspannungsleitung (10) in Wirkverbindung steht,
   b) wobei die mit dem mindestens einen Magnetspeicher (L) in Wirkverbindung stehende Seite des mindestens einen 2. Schaltelementes (V2, S2) über ein 3. Ventil (D1) mit der Seite des 1. Schaltelementes V1) in Verbindung steht, welche nicht mit dem mindestens einen Magnetspeicher (L) in Wirkverbindung steht,
   c) wobei die nicht mit dem mindestens einen Magnetspeicher (L) in Wirkverbindung stehende Seite des mindestens einen 2. Schaltelementes (V2, S2) über ein 4. Ventil (D2) mit der Seite des 1. Schaltelementes (V1) in Verbindung steht, welche mit dem mindestens einen Magnetspeicher (L) in Wirkverbindung steht, und
   d) wobei die 1. und 2. steuerbaren Schaltelemente Halbleiterventile (V1, V2) sind,
   dadurch gekennzeichnet,
   e) dass mindestens zu einem der steuerbaren Halbleiterventile (V1, V2) ein steuerbares mechanisches Schaltelement (S2) parallelgeschaltet ist.

2. Zweiquadrantenstromrichter (8), der mit mindestens einem Magnetspeicher (L) in Wirkverbindung steht,
   a) wobei mindestens ein 1. steuerbares Schaltelement (V1) in einer 1. Gleichspannungsleitung (9) über den mindestens einen Magnetspeicher (L) mit mindestens einem 2. steuerbaren Schaltelement (V2, S2) in einer 2. Gleichspannungsleitung (10) in Wirkverbindung steht,
   b) wobei die mit dem mindestens einen Magnetspeicher (L) in Wirkverbindung stehende Seite des mindestens einen 2. Schaltelementes (V2, S2) über ein 3. Ventil (D1) mit der Seite des 1. Schaltelementes V1) in Verbindung steht, welche nicht mit dem mindestens einen Magnetspeicher (L) in Wirkverbindung steht,
   c) wobei die nicht mit dem mindestens einen Magnetspeicher (L) in Wirkverbindung stehende Seite des mindestens einen 2. Schaltelementes (V2, S2) über ein 4. Ventil (D2) mit der Seite des 1. Schaltelementes (V1) in Verbindung steht, welche mit dem mindestens einen Magnetspeicher (L) in Wirkverbindung steht, und
   d) wobei die 3. und 4. Ventile (D1, D2) Halbleiterventile sind,
   dadurch gekennzeichnet,
   e) dass mindestens zu dem einen der beiden 3. und 4. Halbleiterventile (D1, D2) ein steuerbares mechanisches Schaltelement (S1) parallelgeschaltet ist.

3. Zweiquadrantenstromrichter (8) nach Anspruch 2,
   dadurch gekennzeichnet, dass das 1. oder 2. steuerbare Schaltelement ein steuerbares mechanisches Schaltelement (S2) ist.

4. Zweiquadrantenstromrichter (8) nach Anspruch 2,
   a) wobei die 1. und 2. steuerbaren Schaltelemente steuerbare Halbleiterventile (V1, V2) sind,
   dadurch gekennzeichnet,
   b) dass mindestens zu einem der steuerbaren Halbleiterventile ein steuerbares mechanisches Schaltelement (S2) parallelgeschaltet ist.

5. Zweiquadrantenstromrichter (8) nach Anspruch 1,
   a) wobei die 3. und 4. Ventile (D1, D2) Halbleiterventile sind,

dadurch gekennzeichnet,
b) dass mindestens zu dem einen der beiden 3. und 4. Ventile ein steuerbares mechanisches Schaltelement (S1) parallelgeschaltet ist.

6. Zweiquadrantenstromrichter (8) nach Anspruch 1, dadurch gekennzeichnet, dass das 3. oder 4. Ventil ein steuerbares mechanisches Schaltelement (S1) ist.

7. Zweiquadrantenstromrichter (8) nach einem der Ansprüche 1 bis 6, dadurch gekennzeichnet, dass ein weiteres mechanisches Schaltelement (S3) zu dem mindestens einen Magnetspeicher (L) unmittelbar parallelgeschaltet ist.

8. Verwendung eines Zweiquadrantenstromrichters (8) nach einem der Ansprüche 1 bis 7 zum Stabilisieren der Leistungsübertragung bei einer Netzkupplung, wobei der Zweiquadrantenstromrichter (8) mit dem Energiespeicher (L) an einen Gleichspannungszwischenkreis eines Umrichters der Netzkupplung mit mindestens einem netzkommutierten Stromrichter (3) und mit mindestens einem zwangskommutierten Stromrichter (5) angeschlossen ist.

## Claims

1. Two-quadrant converter (8), which is actively connected to at least one magnetic memory (L),
   a) at least a 1st controllable switching element (V1) in a 1st d.c. line (9) being actively connected via the at least one magnetic memory (L) to at least a 2nd controllable switching element (V2, S2) in a 2nd d.c. line (10),
   b) the side, actively connected to the at least one magnetic memory (L), of the at least one 2nd switching element (V2, S2) being connected via a 3rd valve (Dl) to the side of the 1st switching element (V1) which is not actively connected to the at least one magnetic memory (L),
   c) the side, not actively connected to the at least one magnetic memory (L), of the at least one 2nd switching element (V2, S2) being connected via a 4th valve (D2) to the side of the 1st switching element (V1) which is actively connected to the at least one magnetic memory (L), and
   d) the 1st and 2nd controllable switching elements being semiconductor valves (V1, V2),
   characterized in that
   e) a controllable mechanical switching element (S2) is connected in parallel to at least one of the controllable semiconductor valves (V1, V2).

2. Two-quadrant converter (8), which is actively connected to at least one magnetic memory (L),
   a) at least a 1st controllable switching element (V1) in a 1st d.c. line (9) being actively connected via the at least one magnetic memory (L) to at least a 2nd controllable switching element (V2, S2) in a 2nd d.c. line (10),
   b) the side, actively connected to the at least one magnetic memory (L), of the at least one 2nd switching element (V2, S2) being connected via a 3rd valve (D1) to the side of the 1st switching element (V1) which is one magnetic memory (L),
   c) the side, not actively connected to the at least one magnetic memory (L), of the at least one 2nd switching element (V2, S2) being connected via a 4th valve (D2) to the side of the 1st switching element (V1) which is actively connected to the at least one magnetic memory (L), and
   d) the 3rd and 4th valves (D1, D2) being semiconductor valves,
   characterized in that
   e) a controllable mechanical switching element (S1) is connected in parallel to at least one of the two 3rd and 4th semiconductor valves (D1, D2).

3. Two-quadrant converter (8) according to Claim 2, characterized in that the 1st or 2nd controllable switching element is a controllable mechanical switching element (S2).

4. Two-quadrant converter (8) according to Claim 2,
   a) the 1st and 2nd controllable switching elements being controllable semiconductor valves (V1, V2),
   characterized in that
   b) a controllable mechanical switching element (S2) is connected in parallel to at least one of the controllable semiconductor valves

7

5. Two-quadrant converter (8) according to Claim 1,
   a) the 3rd and 4th valves (D1, D2) being semiconductor valves, characterized in that
   b) a controllable mechanical switching element (S1) is connected in parallel to at least one of the two 3rd and 4th valves.

6. Two-quadrant converter (8) according to Claim 1, characterized in that the 3rd or 4th valve is a controllable mechanical switching element (S1).

7. Two-quadrant converter (8) according to one of Claims 1 to 6, characterized in that a further mechanical switching element (S3) is connected directly in parallel to the at least one magnetic memory (L).

8. Use of a two-quadrant converter (8) according to one of Claims 1 to 7 for stabilizing the power transmission in a network connection, in which the two-quadrant converter (8) having the energy store (L) is connected to an intermediate d.c circuit of a converter of the network connection having at least one line-commutated converter (3) and having at least one self-commutated converter (5).

**Revendications**

1. Convertisseur à deux quadrants (8), qui est activement connecté à au moins une mémoire magnétique (L),
   a) au moins un premier élément de commutation contrôlable (V1) dans une première ligne de courant continu (9) étant activement connecté par l'intermédiaire de l'au moins une mémoire magnétique (L) à au moins un deuxième élément de commutation contrôlable (V2, S2) dans une seconde ligne de courant continu (10),
   b) le côté, activement connecté à l'au moins une mémoire magnétique (L), de l'au moins un deuxième élément de commutation (V2, S2) étant connecté par l'intermédiaire d'un troisième tube électronique (D1) au côté du premier élément de commutation (V1) qui n'est pas activement connecté à l'au moins une mémoire magnétique (L),
   c) le côté, non activement connecté à l'au moins une mémoire magnétique (L), de l'au moins un deuxième élément de commutation (V2, S2) étant connecté par l'intermédiaire d'un quatrième tube électronique (D2) au côté du premier élément de commutation (V1) qui est activement connecté à l'au moins une mémoire magnétique (L), et
   d) les premier et deuxième éléments de commutation contrôlables étant des tubes électroniques à semiconducteurs (V1, V2),
   caractérisé en ce que
   e) un élément de commutation mécanique contrôlable (S2) est connecté en parallèle à au moins un des tubes électroniques à semiconducteurs contrôlables (V1, V2).

2. Convertisseur à deux quadrants (8), qui est activement connecté à un moins une mémoire magnétique (L),
   a) au moins un premier élément de commutation contrôlable (V1) dans une première ligne de courant continu (9) étant activement connecté par l'intermédiaire de l'au moins une mémoire magnétique (L) à au moins un deuxième élément de commutation contrôlable (V2, S2) dans une seconde ligne de courant continu (10),
   b) le côté, activement connecté à l'au moins une mémoire magnétique (L), de l'au moins un deuxième élément de commutation (V2, S2) étant connecté par l'intermédiaire d'un troisième tube électronique (D1) au côté du premier élément de commutation (V1) qui n'est pas activement connecté à l'au moins une mémoire magnétique (L),
   c) le côté, non activement connecté à l'au moins une mémoire magnétique (L), de l'au moins un deuxième élément de commutation (V2, S2) étant connecté par l'intermédiaire d'un quatrième tube électronique (D2) au côté du premier élément de commutation (V1) qui est activement connecté à l'au moins une mémoire magnétique (L), et
   d) les troisième et quatrième tubes électroniques (D1, D2) étant des tubes électroniques à semiconducteurs,
   caractérisé en ce que
   e) un élément de commutation mécanique contrôlable (S1) est connecté en parallèle à au moins un des deux troisième et quatrième tubes électroniques à semiconducteurs (D1, D2).

3. Convertisseur à deux quadrants (8) selon la revendication 2, caractérisé en ce que le premier ou deuxième élément de commutation contrôlable est un élément de commutation mécanique contrôlable (S2).

4. Convertisseur à deux quadrants (8) selon la revendication 2,
   a) les premier et deuxième éléments de commutation contrôlables étant des tubes électroniques à semiconducteurs contrôlables (V1, V2),
   caractérisé en ce que
   b) un élément de commutation mécanique contrôlable (S2) est connecté en parallèle à au moins un des tubes électroniques à semiconducteurs contrôlables.

5. Convertisseur à deux quadrants (8) selon la revendication 1,
   a) les troisième et quatrième tubes électroniques (D1, D2) étant des tubes électroniques à semiconducteurs,
   caractérisé en ce que
   b) un élément de commutation mécanique contrôlable (S1) est connecté en parallèle à au moins un des deux troisième et quatrième tubes électroniques.

6. Convertisseur à deux quadrants (8) selon la revendication 1, caractérisé en ce que le troisième ou quatrième tube électronique est un élément de commutation mécanique contrôlable (S1).

7. Convertisseur à deux quadrants (8) selon l'une des revendications 1 à 6, caractérisé en ce qu'un autre élément de commutation mécanique (S3) est connecté directement en parallèle à l'au moins une mémoire magnétique (L).

8. Utilisation d'un convertisseur à deux quadrants (8) selon l'une des revendications 1 à 7 pour stabiliser la transmission de puissance dans une connexion de réseau, dans laquelle le convertisseur à deux quadrants (8) ayant une mémoire d'énergie (L) est connecté à un circuit courant continu intermédiare d'un convertisseur de la connexion de réseau ayant au moins un convertisseur commuté en ligne (3) et ayant au moins un convertisseur auto-commuté (5).

FIG.1

FIG.2

FIG.3a  FIG.3b  FIG.3c

FIG.4

FIG.5a

FIG.5b

FIG.5c

FIG.5d

FIG.6a

FIG.6b

FIG.6c

FIG.6d

FIG.7

FIG.8a

FIG.8b

FIG.8c

FIG.8d

FIG.8e

FIG.8f

FIG.8g

FIG.9a

FIG.9b

FIG.10a

FIG.10b